# EUROPÄISCHE PATENTANMELDUNG

(11) **EP 1 633 039 A1**
(43) Veröffentlichungstag der Anmeldung: **08.03.2006**
(21) Anmeldenummer: 05107379.9
(22) Anmeldetag: 11.08.2005
(51) Int. Cl.: H02P 3/10, H02P 3/20, D06F 58/28

(54) **Steuerverfahren für einen Elektromotor und Antriebsaggregat zur Ausführung des Verfahrens**

(30) Priorität: 06.09.2004 DE 102004043068
(71) Anmelder: BSH Bosch und Siemens Hausgeräte GmbH, 81739 München (DE)
(72) Erfinder: Link, Ulrich, 40885, Ratingen (DE); Pertermann, Hans-Holger, 01738, Dorfhain (DE); Seidl, Rudolf, 93057, Regensburg (DE); Zvada, Daniel, 81671 München (DE)

(57) **Zusammenfassung**

Ein Antriebsaggregat für ein Elektrogerät umfasst einen n-phasigen Elektromotor (n≥2) (13), einen Stromrichter (12, 16) zum Erzeugen einer n-phasigen Versorgungsspannung für den Elektromotor (13) aus einer Eingangsspannung, wobei die n Phasen eine erste und eine zweite relative Phasenlage einnehmen können, die eine Drehung des Motors (13) in jeweils entgegengesetzte Richtungen zur Folge haben, und einen Steuerblock (2), der bestimmt, ob der Stromrichter (12, 16) mit der Eingangsspannung beaufschlagt wird oder nicht. Der Stromrichter (12, 16) ist eingerichtet, die Drehrichtung des Motors (13) in Abhängigkeit von der Beaufschlagung mit der Eingangsspannung zu steuern.

## Beschreibung

Die vorliegende Erfindung betrifft ein Verfahren zur Steuerung eines mehrphasigen Elektromotors, insbesondere in einem Antriebsaggregat eines Elektrogeräts, wie eines Wäschetrockners, und ein Antriebsaggregat für ein solches Gerät.

Preiswerte Antriebsaggregate für Haushalts-Elektrogeräte verwenden im Allgemeinen einphasige Asynchronmotoren mit Hilfsphase. Diese Motoren weisen wegen ihres nicht symmetrischen Aufbaus bzw. Betriebs stärkere Schwingungen auf als mehrphasige, symmetrisch aufgebaute Motoren, so dass sie bzw. von ihnen zu Schwingungen angeregte Teile erheblich zum Betriebsgeräusch eines Elektrogerätes beitragen, in dem ein solcher Motor eingebaut ist.

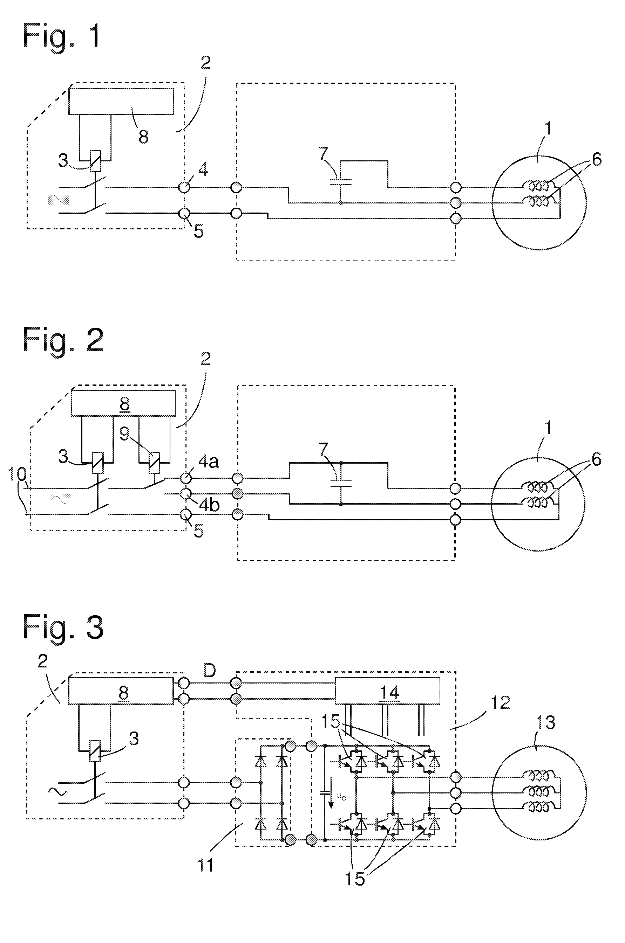

Fig. 1 zeigt stark schematisiert den Aufbau eines herkömmlichen Antriebsaggregats für ein solches Haushaltsgerät mit einem einphasigen Asynchronmotor 1. Ein Steuerblock 2 umfasst einen Mikrocontroller 8, der eingerichtet ist, anhand eines Betriebsprogramms zu entscheiden, wann der Motor 1 ein- und ausgeschaltet werden soll, und dementsprechend ein Schaltrelais 3 zu betätigen, welches den Motor 1 mit einem Netzanschluss verbindet. Der Steuerblock 2 hat zwei Versorgungsspannungsausgänge 4, 5 für den Motor 1, und der Motor 1 hat zwei Wicklungen 6, von denen eine direkt und die andere über einen Kondensator 7 mit den Versorgungsspannungsausgängen 4, 5 verbunden ist. Die durch den Kondensator 7 hervorgerufene Phasenverschiebung zwischen den Strömen der Wicklungen 6 bestimmt die Drehrichtung des Motors 1. Eine Umkehr der Drehrichtung des Motors ist nicht möglich. Ein solches Antriebsaggregat wird beispielsweise in einem Wäschetrockner des unteren Preissegments eingesetzt, um Wäschetrommel und Gebläse anzutreiben.

Fig. 2 zeigt ein ebenfalls bekanntes, weiter entwickeltes Antriebsaggregat, welches sich von dem der Fig. 1 dadurch unterscheidet, dass der Mikrocontroller 8 zusätzlich ein Drehrichtungsrelais 9 steuert. Das Drehrichtungsrelais 9 verbindet einen der zwei Netzspannungseingänge 10 des Steuerblocks 2 wahlweise mit einem von zwei Versorgungsspannungsausgängen 4a, 4b. Der Kondensator 7 ist zwischen die zwei Versorgungsspannungsausgänge 4a, 4b geschaltet, so dass die Phasenverschiebung zwischen den durch die zwei Wicklungen 6 fließenden Strömen ihr Vorzeichen wechselt, je nachdem, welcher der zwei Ausgänge 4a, 4b die Versorgungsspannung führt, und dementsprechend die Drehrichtung des Motors 1 umkehrbar ist. Bei Verwendung des Motors 1 als Antrieb für eine Wäschetrommel bewirkt die vorübergehende Umkehrung der Drehrichtung eine Auflockerung der Wäsche.

Eine Möglichkeit, das Betriebsgeräusch eines solchen Geräts zu verringern, ist die Verwendung eines symmetrischen n-phasigen Motors mit n≥2. Verbreitet sind Motoren mit n=3. Für letztere wird jedoch eine n-phasige Versorgungsspannung benötigt, die in Privathaushalten normalerweise nicht zur Verfügung steht. Zwischen Steckdose und Motor muss daher ein Stromrichter vorgesehen werden, der die ihm vom Steuerblock 2 zur Verfügung gestellte einphasige Eingangsspannung, die bei geschlossenem Schaltrelais 3 mit der Netzspannung identisch ist, in die n-phasige Versorgungsspannung für den Motor umwandelt.

Fig. 3 zeigt schematisch ein Antriebsaggregat mit einem solchen mehrphasigen Motor 13. Wie im Falle der Fig. 1 ist ein Steuerblock 2 mit einem Mikrocontroller 8 und einem Schaltrelais 3 vorhanden, doch speist dessen Ausgangsspannung den Motor 13 nicht direkt, sondern über einen Stromrichter, der einen Gleichrichter 11 und einen Wechselrichter 12, der eine vom Gleichrichter 11 gelieferte Zwischenkreisspannung in eine dreiphasige Versorgungswechselspannung für den dreiphasigen Motor 13 umsetzt, umfasst. Der Wechselrichter 12 umfasst einen Modulator 14 und eine Matrix von Leistungsschaltern 15, die vom Modulator 14 angesteuert werden, um die Versorgungsspannung des Motors 13 aus der Zwischenkreisspannung zu erzeugen, wobei das vom Modulator 14 an die Schalter 15 angelegte zeitliche Muster die Phasenfolge der Ströme in den drei Wicklungen 6 des Motors 13 und damit dessen Drehrichtung bestimmt. Wenn ein Betrieb des Motors 13 in unterschiedlichen Drehrichtungen möglich sein soll, benötigt der Modulator 14 ein Signal D vom Mikrocontroller 8, welches die gewünschte Drehrichtung vorgibt, und es müssen entsprechende Signalleitungen zwischen dem Mikrocontroller 8 und dem Modulator 14 des Wechselrichters 12 vorgesehen werden.

Wie man sieht, ist der Steuerblock 2 bei jedem der drei oben beschriebenen Antriebsaggregate spezifisch. D.h., wenn ein Hersteller unterschiedlicher Modelle eines motorbetriebenen Geräts anbieten will, wobei in den preiswerten Geräten ein einphasiger Motor und in den höherwertigen Geräten ein ruhiger laufender mehrphasiger Motor eingesetzt wird, so ist er gezwungen, für jedes dieser Modelle einen eigenen Steuerblock zu entwickeln und zu fertigen, was erhebliche Entwicklungs- und Fertigungskosten mit sich bringt, oder einen aufwändigen Steuerblock vom Typ der Fig. 2 oder Fig. 3 in einem Antriebsaggregat vom Typ der Fig. 1 einzusetzen, wo ein Teil der Fähigkeiten dieses Steuerblocks ungenutzt bleibt. Die Verwendung eines solchen teuren Steuerblocks in einem Antriebsaggregat nach Fig. 1, das im Allgemeinen für ein Elektrogerät der unteren Preiskategorie vorgesehen sein wird, ist jedoch unwirtschaftlich.

Um diese Kosten zu reduzieren, wäre es wünschenswert, über ein Antriebsaggregat zu verfügen, das mit einem einfachen, nur die zum Steuern eines einphasigen Elektromotors erforderlichen Fähigkeiten aufweisenden Steuerblock auskommt und dennoch in der Lage ist, einen mehrphasigen Elektromotor zu steuern. Dieser Steuerblock könnte dann in großer Stückzahl und dementsprechend preiswert gefertigt werden und sowohl in Antriebsaggregaten für einphasige als auch solchen für mehrphasige Elektromotoren eingesetzt werden.

Außerdem besteht Bedarf nach einem Steuerverfahren, das es unter Verwendung eines solchen einfachen Steuerblocks erlaubt, die Vorteile der mehrphasigen Elektromotoren auszunutzen.

Aufgabe der Erfindung ist daher, ein solches Antriebsaggregat für ein Elektrogerät, insbesondere für einen Wäschetrockner, mit einem mehrphasigen Elektromotor, und ein Steuerverfahren für einen mehrphasigen Elektromotor, das mit dem Antriebsaggregat ausführbar ist, anzugeben.

Ausgehend von einem Antriebsaggregat mit einem n-phasigen Elektromotor (n≥2), einem Stromrichter zum Erzeugen einer n-phasigen Versorgungsspannung für den Elektromotor aus einer ihm zur Verfügung gestellten Eingangsspannung, wobei die n Phasen eine erste und eine zweite Phasenfolge einnehmen können, die eine Drehung des Motors in jeweils entgegengesetzte Richtungen zur Folge haben, und einem Steuerblock, der bestimmt, ob der Stromrichter mit der Eingangsspannung beaufschlagt wird oder nicht, wird die Aufgabe gemäß Anspruch 1 bzw. Anspruch 13 dadurch gelöst, dass der Stromrichter die Drehrichtungen des Motors in Abhängigkeit von der Beaufschlagung mit einer Eingangsspannung steuert. Die Fähigkeit, die Drehrichtung des Motors umzukehren, ist somit gewissermaßen im Wechselrichter implementiert, nicht aber im Steuerblock. Letzterer entscheidet nur, ob der Motor läuft, nicht aber, in welche Richtung. Der für das einfache Antriebsaggregat mit einphasigem Asynchronmotor ohne Drehrichtungsumkehr ausgelegte einfache Steuerblock kann somit identisch für das erfindungsgemäße Antriebsaggregat mit n-phasigem Elektromotor mit Drehrichtungsumkehr eingesetzt werden.

Einer bevorzugten Ausgestaltung zufolge ist vorgesehen, dass der Stromrichter die Drehrichtungen in Abhängigkeit von einer Unterbrechung seiner Eingangsspannung steuert, insbesondere dass er jeweils nach einer Unterbrechung der Eingangsspannung die Versorgungsspannung für den Motor während einer Anfangszeitspanne mit der ersten Phasenfolge und danach mit der zweiten Phasenfolge erzeugt. Wenn der Steuerblock das Schaltrelais 3 öffnet, so bewirkt dies beim einphasigen Motor lediglich ein kurzes Stehenbleiben, bei dem n-phasigen Motor im erfindungsgemäßen Antriebsaggregat wird jedoch erreicht, dass der Motor während der Anfangszeitspanne in einer Nebendrehrichtung und danach dauerhaft in einer Hauptdrehrichtung rotiert.

Wenn z.B. das Verfahren bzw. das Antriebsaggregat zum Antreiben eines Wäschetrockners eingesetzt wird, kann es wünschenswert sein, wenn der Wäschetrockner frisch mit zu trocknender Wäsche beladen worden ist, die Phase der Drehung in Nebendrehrichtung zu unterdrücken. Dies kann vorteilhaft erreicht werden indem ein über die Eingangsspannung des Stromrichters versorgbarer flüchtiger Datenspeicher vorgesehen wird, dessen Inhalt einen ersten Wert annimmt, wenn der Wechselrichter dauerhaft nicht mit der Eingangsspannung versorgt ist, (d.h. im Falle eines Wäschetrockners: wenn dieser nicht in Gebrauch ist), indem der Stromrichter die Drehrichtungen des Elektromotors in Abhängigkeit von dem Dateninhalt dieses Datenspeichers steuert. Dabei wird einer ersten Variante zufolge zwischen zwei Unterbrechungen der Eingangsspannung der Inhalt des Datenspeichers auf einen zweiten Wert gesetzt. Der Dateninhalt nach einer Unterbrechung der Eingangsspannung hängt dann davon ab, wie lang die Unterbrechung war. Wenn die Unterbrechung so kurz war, dass der zweite Wert im Datenspeicher erhalten geblieben ist, erzeugt der Stromrichter die Versorgungsspannung für den Motor während einer Anfangszeitspanne mit der ersten Phasenfolge und anschließend mit der zweiten. Wenn der Datenspeicher den ersten Wert hat, wird die Versorgungsspannung für den Motor sofort mit der zweiten Phasenfolge erzeugt. So läuft ein mit dem erfindungsgemäßen Antriebsaggregat ausgestatteter Wäschetrockner zu Beginn eines Trockenvorgangs von vorneherein in der Hauptdrehrichtung an, doch kann durch eine zeitweilige Unterbrechung der Eingangsspannung für den Stromrichter jederzeit eine vorübergehende Drehrichtungsumkehr bewirkt werden.

Einer zweiten Variante zufolge wird eine ähnliche Wirkung dadurch erzielt, dass der Stromrichter den Inhalt des flüchtigen Datenspeichers zwischen zwei Unterbrechungen seiner Eingangsspannung invertiert. Wenn nach einer dauerhaften Unterbrechung der Steuerblock die Eingangsspannung des Stromrichters einschaltet, läuft der Motor stets in der gleichen Drehrichtung an, und nach jeder Unterbrechung der Eingangsspannung, die nicht lang genug dauert, um dazu zu führen, dass der flüchtige Datenspeicher den ersten Wert annimmt, kehrt sich die Drehrichtung des Motors um. Auch bei diesem Antriebsaggregat kann der für den einphasigen Asynchronmotor ohne oder mit Wahlmöglichkeit der Drehrichtung optimierte Steuerblock unverändert zur Steuerung des Stromrichters für den in zwei Drehrichtungen zu betreibenden dreiphasigen Motor verwendet werden.

Der Datenspeicher wird zweckmäßigerweise über eine Stromversorgung indirekt aus der an einem Kondensator anliegenden, aus der Eingangsspannung des Stromrichters abgeleiteten Zwischenkreisspannung mit Betriebsenergie versorgt. Während einer zeitweiligen Unterbrechung der Eingangsspannung nimmt die Klemmenspannung u_{c} des Kondensators (und damit die Zwischenkreisspannung) im Laufe der Unterbrechung in dem Maße ab, wie die in ihm gespeicherte elektrische Energie verbraucht wird, bis sie schließlich, nach einer bestimmten Dauer der Unterbrechung, nicht mehr ausreicht, um den Datenspeicher zu betreiben, und dessen Inhalt den ersten Wert annimmt.

Wenn der Stromrichter in an sich bekannter Weise einen Modulator und eine Mehrzahl von Schaltern aufweist, die zwischen einem mit der Eingangsspannung beaufschlagbaren Eingang des Stromrichters und einem mit dem Motor verbundenen Ausgang desselben angeordnet sind und gesteuert durch Signale des Modulators die Zwischenkreisspannung in die n-phasige Versorgungsspannung für den Motor umsetzen, so ist vorzugsweise der Modulator eingerichtet, diese Schalter zu öffnen, wenn die Zwischenkreisspannung einen Grenzwert unterschreitet. So wird, wenn der Stromrichter nicht mehr mit der Eingangsspannung versorgt wird, der Motor abgekoppelt, so dass eine geringe Kapazität des Speicherkondensators ausreicht, um den Datenspeicher im Falle einer Unterbrechung der Eingangsspannung für eine gegebene Zeitspanne weiterzubetreiben.

Dieser Grenzwert sollte zweckmäßigerweise zwischen demjenigen Wert liegen, der sich bei niedrigster zulässiger Eingangsspannung einstellt und jenem Wert, der für einen für den Betrieb des Datenspeichers erforderlichen Mindestversorgungsspannung erforderlich ist.

Bei Verwendung eines Steuerblocks vom in Fig. 2 dargestellten Typ, mit einem ersten und einem zweiten Ausgang, die jeweils alternativ in der Lage sind, die Versorgungsspannung zu führen, steuert gemäß einer alternativen Ausgestaltung der Erfindung der Stromrichter die Drehrichtung des Elektromotors je nachdem, an welchem der zwei Ausgänge die Versorgungsspannung anliegt.

Wie bereits erwähnt, ist eine bevorzugte Anwendung des erfindungsgemäßen Antriebsaggregats ein Wäschetrockner, in welchem das Antriebsaggregat zum Drehantreiben der Wäschetrommel und/oder eines Gebläses dienen kann.

Das Gebläse dient im Allgemeinen dazu, von einer Heizung erhitzte Luft in die Wäschetrommel zu blasen. Wenn Wäschetrommel und Gebläse durch den gleichen Motor angetrieben sind, ändert sich bei einer Drehrichtungsumkehr der Wäschetrommel auch die Drehrichtung des Gebläses. Wenn das Gebläse in der falschen Richtung rotiert, kann es unwirksam sein, oder es bläst die erhitzte Luft nicht in die Wäschetrommel. Die Heizung wird daher vorzugsweise durch den Steuerblock nur dann eingeschaltet, wenn das Gebläse in derjenigen Richtung rotiert, die zum Blasen der erhitzten Luft in die Wäschetrommel erforderlich ist.

Weitere Merkmale und Vorteile der Erfindung ergeben sich aus der nachfolgenden Beschreibung von Ausführungsbeispielen mit Bezug auf die beigefügten Figuren. Es zeigen:
- Figs. 1, 2, 3: bereits behandelt, schematische Darstellungen von herkömmlichen Antriebsaggregaten;
- Fig.4: eine schematische Darstellung eines erfindungsgemäßen Antriebsaggregats;
- Fig. 5: den zeitlichen Ablauf des Betriebs des Antriebsaggregats aus Fig. 4;
- Fig. 6: eine zweite Ausgestaltung eines erfindungsgemäßen Antriebsaggregats;
- Fig.7: den Ablauf des Betriebs des Antriebsaggregats aus Fig. 6 ohne Drehrichtungswechsel;
- Fig. 8: den zeitlichen Ablauf des Betriebs des Antriebsaggregats aus Fig. 6 mit Drehrichtungswechsel;
- Fig. 9: ein Flussdiagramm eines im Wechselrichter ablaufenden Arbeitsverfahrens;
- Fig. 10: eine dritte Ausgestaltung des erfindungsgemäßen Antriebsaggregats; und
- Fig. 11: einen Wechselrichter für ein Antriebsaggregat gemäß einer weiterentwickelten Ausgestaltung der Erfindung.

Der Anschaulichkeit der Beschreibung wegen wird im Folgenden angenommen, dass die beispielhaft beschriebenen Antriebsaggregate jeweils in einem Wäschetrockner eingebaut sind, wo ihr Motor jeweils sowohl eine Wäschetrommel als auch ein Gebläse zum Zuführen von durch eine elektrische Heizung erwärmter Luft in die Wäschetrommel antreibt. Dabei wird üblicherweise die Wäschetrommel über einen Riemen angetrieben, wobei eine solche Übersetzung gewählt wird, dass die Trommeldrehzahl deutlich unterhalb der Motordrehzahl liegt. Da einerseits eine große Lüfterdrehzahl und andererseits eine niedrige Trommeldrehzahl gewünscht wird, reicht häufig eine einstufige Übersetzung mit Hilfe des Riemens nicht. Es wird dann zwischen dem Motor einerseits und der Wäschetrommel und/oder dem Gebläse andererseits ein Getriebe vorgesehen, um mit Hilfe des einen Motors die Wäschetrommel mit einer niedrigen und das Gebläse mit einer hohen Drehzahl anzutreiben. Dies ist notwendig, da beim einphasigen Motor die Drehzahl nur durch die Polzahl in sehr großen Stufen festgelegt werden kann (z. B. bei 50 Hz Netzfrequenz knapp unter 3000 min⁻¹ und als nächst niedrigere Drehzahl knapp unter 1500 min⁻¹). Durch den Einsatz des n-phasigen Motors in Verbindung mit dem Stromrichter können erfindungsgemäß die Trommel (wie oben beschrieben über den Riemen) und das Gebläse direkt an den Motor gekoppelt sein, der in diesem Fall bei einer durch den Stromrichter eingestellten mittleren Drehzahl betrieben wird (beispielsweise bei 2200 min⁻¹).

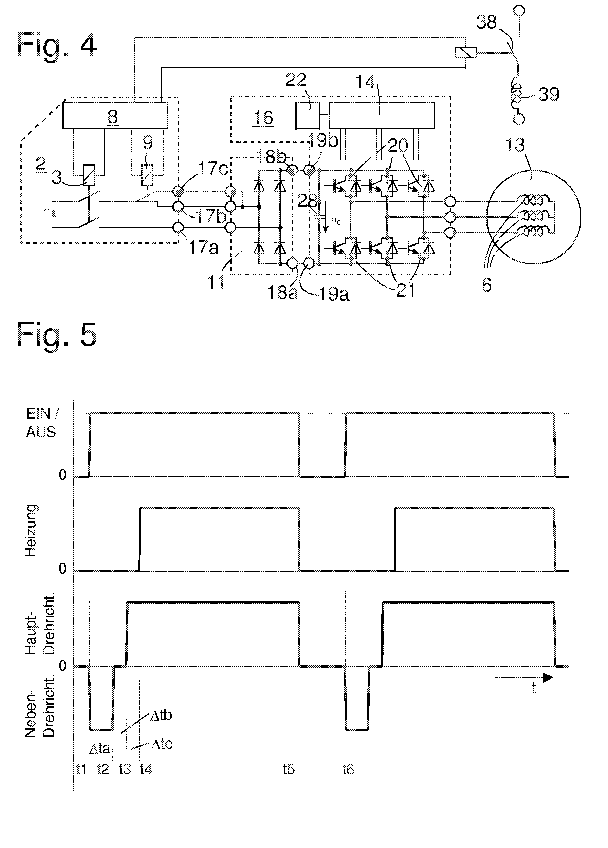

Das Antriebsaggregat der Fig. 4 umfasst einen Steuerblock 2 vom in Fig. 1 oder Fig. 2 gezeigten Typ, der hier nicht wieder im Detail beschrieben wird, einen Gleichrichter 11, wie in Fig. 3 gezeigt, einen Wechselrichter 16 und einen Elektromotor 13, der hier dreiphasig dargestellt ist, im Prinzip aber eine beliebige Zahl n von Phasen ≥ 2 haben kann. Sowohl der Wechselrichter 16 allein als auch seine Kombination mit dem Gleichrichter 11 können als Stromrichter im Sinne der obigen Ausführungen aufgefasst werden. Der Steuerblock 2 und der Wechselrichter 16 sind jeweils auf verschiedenen Leiterplatten aufgebaut, der Gleichrichter 11 kann sich auf der Leiterplatte des Wechselrichters 12 oder auf einer eigenen Leiterplatte befinden; die Leiterplatten sind untereinander durch Kabel und Steckverbinder verbunden.

Der Steuerblock 2 hat, je nachdem, ob er vom in Fig. 1 gezeigten Typ oder dem in Fig. 2 gezeigten Typ ist, zwei Ausgangsklemmen 17a, 17b oder drei Ausgangsklemmen 17a, 17b, 17c, zwischen denen, wenn der Mikrocontroller 8 des Steuerblocks 2 das Schaltrelais 3 geschlossen hält, eine Netzwechselspannung anliegt. An die Ausgangsklemmen 17a, 17b und gegebenenfalls 17c ist der Gleichrichter 11 angeschlossen. Die Klemmen 17b und 17c sind auf der Leiterplatte des Gleichrichters 11 kurzgeschlossen.

Die Ausgangsklemmen 18a, 18b des Gleichrichters 11 sind mit Eingangsklemmen 19a, 19b des Wechselrichters 16 verbunden. Zwischen die Eingangsklemmen 19a, 19b sind parallel geschaltet ein Speicherkondensator 28 und n Stränge mit jeweils zwei in Reihe verbundenen Leistungsschaltern 20, 21. Zwischen den Klemmen des Speicherkondensators 28 liegt die Zwischenkreisspannung u_{c} an. Die Leistungsschalter 20, 21 sind in an sich bekannter Weise aufgebaut aus einem Leistungstransistor und einer zu dessen Hauptelektroden antiparallel geschalteten Freilaufdiode. Die Steuerelektroden der Leistungstransistoren empfangen jeweils Schaltmustersignale von einem Modulator 14. An den Modulator 14 sind mehrere Zeitschaltglieder 22 angeschlossen. Die Zeitschaltglieder können als Schaltung oder, wenn der Modulator 14 einen zweiten Mikrocontroller enthält, auch durch Software realisiert sein.

Die Mittenpunkte zwischen zwei Leistungsschaltern 20, 21 jedes Strangs sind mit jeweils einer Phase 6 des Motors 13 verbunden.

Fig. 5 veranschaulicht den zeitlichen Ablauf des Betriebs des Antriebsaggregats aus Fig. 4. Die erste Zeile dieses Diagramms, "ein/aus" gibt den Zustand, geschlossen oder offen, des Schaltrelais 3 an. Am Ursprungspunkt der Zeit t ist das Relais offen. Zur Zeit t1 wird es vom Mikrocontroller 8 geschlossen, und der Wechselrichter 16 beginnt zu arbeiten. Er initialisiert eines der Zeitschaltglieder 22 auf eine Zeitspanne Δta und versorgt die Leistungsschalter 20, 21 mit Schaltmustersignalen, deren Phasenfolge so gewählt ist, dass der Motor 13 in einer ersten Drehrichtung, als Nebendrehrichtung bezeichnet, zu rotieren beginnt.

Wie in der mit "Haupt-Drehrichtung/Neben-Drehrichtung" bezeichneten Zeile aus Fig. 5 gezeigt, veranlasst der Ablauf der im ersten Zeitschaltglied 22 eingestellten Zeitspanne Δta zur Zeit t2 den Modulator 14, die Schaltmustererzeugung für eine wiederum mit Hilfe eines Zeitschaltgliedes 22 abgemessene Zeitspanne Δtb zu unterbrechen, so dass der Motor zum Stehen kommt. Nach Ablauf dieser Zeitspanne zum Zeitpunkt t3 nimmt der Modulator 14 die Erzeugung der Schaltmustersignale wieder auf, diesmal jedoch mit umgekehrten Vorzeichen der Phasenfolge, so dass der Motor 13 in entgegengesetzter Richtung, als Hauptdrehrichtung bezeichnet, zu rotieren beginnt. Diese Drehrichtung wird beibehalten, bis zur Zeit t5 der Mikrocontroller 8 das Schaltrelais 3 wieder öffnet.

Das Schaltrelais 38 für die Heizung 39 wird durch den Steuerblock 2 erst dann angesteuert, wenn seit dem Zuschalten des Schaltrelais 3 eine Zeitspanne Δta + Δtb + Δtc (Δtc > 0) vergangen ist. Dadurch ist sichergestellt, dass die Heizung 39 noch nicht läuft, wenn im Zeitintervall Δta das Gebläse des Trockners in Nebendrehrichtung rotiert und deshalb von der Heizung 39 erhitzte Luft der Trommel noch nicht zuführen kann.

Während eine Ladung Wäsche getrocknet wird, öffnet der Steuerblock 2 mehrere Male für kurze Zeit das Schaltrelais 3, in Fig. 5 zwischen den Zeitpunkten t5 und t6, so dass mangels Energiezufuhr die Zwischenkreisspannung u_{c} abnimmt und schließlich der Motor 13 stehen bleibt. Jedes Mal, wenn durch Zuschalten des Schaltrelais 3 die Zwischenkreisspannung wiederkehrt, läuft der Motor 13 zunächst in der Nebendrehrichtung an, um so die Wäsche in der Trommel aufzulockern.

Durch die beschriebenen Anordnungen und Abläufe kann der Steuerblock 2 für einen einphasigen Motor, der je nach Ausführung in einer (Fig. 1) oder in zwei (Fig. 2) Drehrichtungen betrieben wird, ohne wesentliche Modifikationen für einen n-phasigen, in zwei Drehrichtungen zu betreibenden Antrieb eingesetzt werden. Beim einphasigen Motor hat das vorübergehende Unterbrechen der Energiezufuhr durch Öffnen des Schaltrelais 3 von t5 bis t6 keinen Einfluss auf die Drehrichtung des einphasigen Motors 1. In einem Aufbau nach Fig. 2 kann jedoch die Drehrichtung des Motors 1 gleich der des Motors 13 von Fig. 4 gemacht werden, indem der Mikrocontroller 8 das Schaltrelais 3 und das Drehrichtungsrelais 9 entsprechend den Zeitintervallen Δta, Δtb ansteuert.

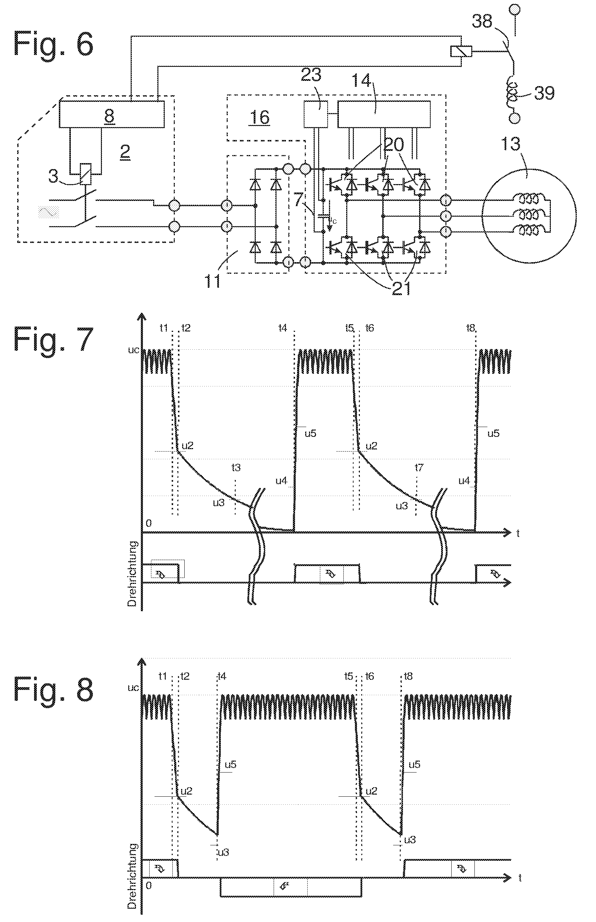

Fig. 6 zeigt eine zweite Ausgestaltung eines erfindungsgemäßen Antriebsaggregats. Steuerblock 2 und Gleichrichter 11 sind mit denen der Fig. 4 identisch und werden nicht erneut erläutert. Der Modulator 14 ist eingerichtet, um lesend und schreibend auf einen Datenspeicher 23 zuzugreifen, dessen Versorgungsspannung von der Zwischenkreisspannung u_{c} abhängig ist.

Der Datenspeicher ist flüchtig, d.h., wenn die Energiezufuhr lang genug ausgeschaltet ist, so dass sich der Speicherkondensator entladen kann, nimmt der Inhalt des Speicherelements 23 den Wert 0 an.

Zwei Betriebsmodi dieses Antriebsaggregats werden anhand von Fig. 7 bzw. 8 erläutert.

Am Zeitursprung in Fig. 7 ist das Schaltrelais 3 geschlossen, und der Motor 13 läuft in der Hauptdrehrichtung. Wenn zur Zeit t1 das Schaltrelais 3 geöffnet wird, beginnt die Spannung am Speicherkondensator 28, abzufallen. Wenn sie zur Zeit t2 einen Wert u2 erreicht, öffnet der Modulator 14 alle Schalter 20 oder alle Schalter 21, so dass kein Antriebsstrom mehr vom Speicherkondensator 28 durch den Motor 13 fließen kann. Dadurch bleibt der Motor nach einiger Zeit stehen und es verlangsamt sich die Abnahme der Spannung am Kondensator 28, wie am Verlauf der Spannungskurve in Fig. 7 zwischen den Zeiten t2 und t3 zu erkennen ist. Zum Zeitpunkt t3 erreicht die Spannung einen Wert u3, der für den Betrieb des Speicherelements 23 nicht mehr ausreicht, so dass dessen Inhalt den Wert 0 annimmt, unabhängig davon, welcher Wert zuvor gespeichert war.

Wenn zur Zeit t4 das Schaltrelais 3 wieder schließt, und der Modulator 14 seinen Betrieb wieder aufnimmt, liest er aus dem Speicherelement 23 den Wert 0 und entscheidet anhand dieses Wertes, dass der Hauptdrehrichtung des Motors 13 entsprechende Schaltmustersignale an die Schalter 20, 21 auszugeben sind. Der Motor läuft in Hauptdrehrichtung an. Der Modulator 14 invertiert den Inhalt des Datenspeichers 23, dieser nimmt den Wert 1 an.

Fig. 8 zeigt die Entwicklung der Spannung am Kondensator 28 und die Drehrichtung des Motors 13 in dem Fall, dass das Schaltrelais 3 nur kurze Zeit geöffnet wird. Bis zum Zeitpunkt t4 ist der Ablauf derselbe wie in Fig. 7. Zur Zeit t4 in Fig. 8 ist die Kondensatorspannung noch höher als u3, so dass der während der Einschaltphase vor t1 im Speicherelement 23 eingetragene Wert 1 noch vorhanden ist, wenn die Zwischenkreisspannung zur Zeit t4 wiederkehrt. Der Modulator 14 liest diesen Wert, entscheidet, dass ein Schaltmustersignal für eine Drehung des Motors 13 in Nebendrehrichtung erzeugt werden muss, und invertiert den Inhalt des Speicherelements 23 erneut. Wenn zur Zeit t5 das Schaltrelais 3 von neuem geöffnet und zur Zeit t8 wieder geschlossen wird, liest der Modulator 14 im Speicherelement 23 den Wert Null und treibt eine Drehung des Motors in Hauptdrehrichtung.

Während bei dem Antriebsaggregat der Fig. 4 jedes Schließen des Schaltrelais 3 zunächst zu einer Drehung in Neben- und danach in Hauptdrehrichtung führt, läuft bei dem Antriebsaggregat der Fig. 6 der Motor vom ersten Einschalten an in Hauptdrehrichtung, und die Drehrichtung des Motors kann jeder Zeit willkürlich durch kurzzeitiges Öffnen des Schaltrelais 3 umgekehrt werden.

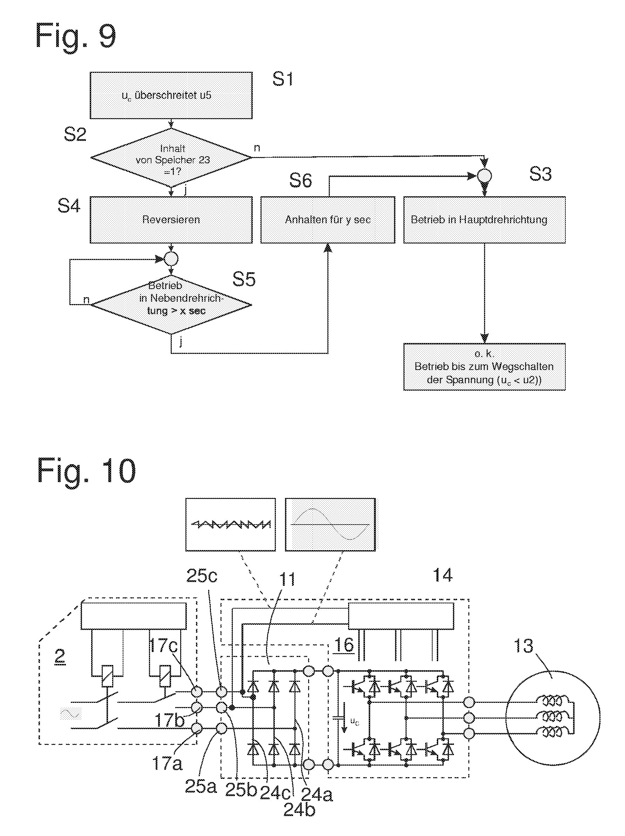

Wenn, wie in Fig. 6 gezeigt, der Mikrocontroller 8 des Steuerblocks 2 die Heizung 39 über das Schaltrelais 38 steuert, so ist a priori nicht ausgeschlossen, dass die Heizung 39 betrieben wird, während der Motor 13 in der Nebendrehrichtung läuft, d.h., während die Wärme nicht von der Heizung 39 in die Trocknertrommel abgeführt werden kann. Eine solche Situation muss vermieden werden, da sie eine Brandgefahr beinhaltet. Es wäre zwar möglich, diese Gefahr auszuschalten, indem man den Steuerblock 2 der Fig. 6 durch einen modifizierten Steuerblock ersetzt, der in der Lage ist, die vom Modulator 14 festgelegte Drehrichtung des Motors zu erfassen und in Abhängigkeit von der erfassten Drehrichtung das Einschalten der Heizung 39 freizugeben oder zu sperren, doch würde dies den Steuerblock 2 verkomplizieren und somit zu überflüssigen Kosten führen, wenn derselbe Typ von Steuerblock in einem anderen Gerätemodell zum Betreiben eines einphasigen Motors eingesetzt wird. Es ist daher zweckmäßiger, die Gefahr der Überhitzung durch eine Weiterentwicklung des Modulators 14 auszuräumen, insbesondere indem der Modulator 14 das in Fig. 9 dargestellte, nachfolgend beschriebene Verfahren ausführt.

Wenn in Schritt S1 die Zwischenkreisspannung u_{c} den Wert u5 überschreitet, der für einen Betrieb des Modulators 14 ausreicht, überprüft dieser zunächst den Inhalt des Speichers 23 (Schritt S2). Wenn dieser Wert Null ist, wird der Motor 13 sofort in der Hauptdrehrichtung in Gang gesetzt (S3), so dass Wärme von der Heizung 39 in die Trocknertrommel abgeführt werden kann. Wenn hingegen in Schritt S2 der Speicherinhalt gleich Eins ist, so bedeutet dies, dass die Versorgungsspannung nur kurzzeitig unterbrochen worden ist, um einen Wechsel der Drehrichtung zu erzwingen, und folglich setzt der Modulator 14 den Motor 13 in der Nebendrehrichtung in Gang (S4). Die Dauer des Betriebs in Nebendrehrichtung wird gemessen, und sobald eine festgesetzte Zeitspanne Δta überschritten ist (S5), hält der Modulator 14 den Motor für eine Zeitspanne Δtb an (S6), um anschließend zum Betrieb in Hauptdrehrichtung (S3) überzugehen. Die Zeitspannen Δta, Δtb sind dabei kürzer gewählt als eine Verzögerung, mit der der Mikrocontroller 8 des Steuerblocks 2 nach Einschalten der Versorgungsspannung die Heizung 39 in Betrieb nimmt, so dass in jedem Fall der Motor 13 in Hauptdrehrichtung läuft, bevor die Heizung 39 in Betrieb geht.

Eine alternative Arbeitsweise des Antriebsaggregats der Fig. 6 läuft folgendermaßen ab: wenn das Schaltrelais 3 geschlossen wird, liest der Modulator 14 den Inhalt des Speicherelements 23 und setzt ihn anschließend auf Eins. Wenn der soeben gelesene Wert des Speicherelements 23 Null ist, beginnt der Modulator 14 unmittelbar, den Motor in Hauptdrehrichtung zu treiben. Wenn der gelesene Wert eins ist, so zeigt dies, dass das Schaltrelais nur kurze Zeit geschlossen gewesen ist, und in diesem Fall treibt der Modulator zunächst während eines Zeitintervalls Δta eine Drehung des Motors in Nebendrehrichtung an, um dann, nach Stillstand im Zeitintervall Δtb, in die Hauptdrehrichtung zu wechseln, wie mit Bezug auf Fig. 5 beschrieben. Spätestens zu diesem Zeitpunkt läuft der Motor also unabhängig vom im Speicher 23 gelesenen Wert in der Hauptdrehrichtung, so dass der Steuerblock 2 jeweils zum Zeitpunkt Δta+Δtb nach Schließen des Schaltrelais 3 die Heizung 39 gefahrlos zuschalten kann.

Fig. 10 zeigt ein Blockdiagramm einer vierten Ausgestaltung des erfindungsgemäßen Antriebsaggregats, in welchem ein Steuerblock vom in Fig. 2 gezeigten Typ verwendet ist. Der Gleichrichter 11 hat hier drei Stränge 24a, 24b, 24c von in Reihe geschalteten Dioden, die über Eingänge 25a, 25b, 25c an die Ausgangsklemmen 17a, 17b bzw. 17c des Steuerblocks 2 angeschlossen sind. Bei der in Fig. 10 gezeigten Stellung des Drehrichtungsrelais 9 liegt am Ausgang 17c Spannung an, nicht aber am Ausgang 17b (dort stellt sich nur eine kleine, von den Sperrströmen der Dioden in Strang 24b bestimmte Rauschspannung ein). Der Modulator 14 ist mit den Eingängen 25b, 25c verbunden, um zu erfassen, welcher von beiden Spannung empfängt. In Abhängigkeit davon wählt er das an die Schalter 20, 21 auszugebende Schaltsignalmuster bzw. die Drehrichtung des Motors.

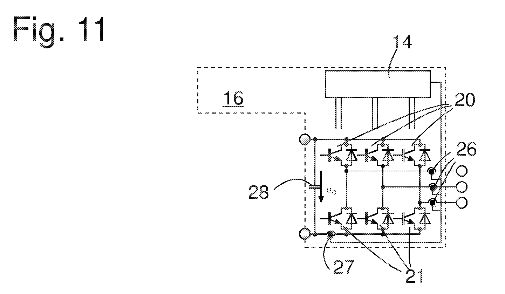

Fig. 11 zeigt eine Weiterbildung des Wechselrichters 16, die bei allen oben beschriebenen Ausführungsbeispielen anwendbar ist. Mit dem Modulator 14 verbundene Stromsensoren 26, 27 sind an mindestens einer der drei Ausgangsphasen des Wechselrichters 16 und/oder zwischen dem Zwischenkreiskondensator 28 und einer der Schaltergruppen 20 und 21 angeordnet. Anhand dieser Sensoren 26, 27 sowie ggf. unter zusätzlicher Nutzung eines Signals der Zwischenkreisspannung u_{c} ist es dem Modulator 14 möglich, die Motorlast zu erfassen und über die Frequenz der an die Schalter 20, 21 angelegten Schaltmustersignale die Motordrehzahl an die Last anzupassen und so eine besonders gleichmäßige Verteilung der Wäsche in der Trommel zu erreichen und damit den Wäschetrockenprozess zu unterstützen.

Alternativ kann zu demselben Zweck vorgesehen werden, dass der Modulator 14 die Drehzahl des Motors 13 gemäß einer vorgegebenen Zeitfunktion und/oder in einem vorgegebenen Drehzahlband variiert.

## Patentansprüche

1. Verfahren zur Steuerung eines mehrphasigen Elektromotors (13), insbesondere in einem Antriebsaggregat eines Elektrogerätes, wie eines Wäschetrockners, bei dem ein Stromrichter (11, 16) eine mehrphasige Versorgungsspannung für den Elektromotor (13) aus einer Eingangsspannung erzeugt, wobei eine erste Phasenfolge der Versorgungsspannung eine Drehung des Elektromotors (13) in eine Nebendrehrichtung und eine zweite Phasenfolge eine Drehung des Elektromotors (13) in eine der Nebendrehrichtung entgegengesetzte Hauptdrehrichtung bewirkt, und bei dem ein Steuerblock (2) eine Beaufschlagung des Stromrichters (11, 16) mit der Eingangsspannung steuert, **dadurch gekennzeichnet, dass** der Stromrichter (11, 16) die Drehrichtungen des Elektromotors (13) in Abhängigkeit von der Beaufschlagung mit der Eingangsspannung steuert.

2. Verfahren nach Anspruch 1, **dadurch gekennzeichnet, dass** der Stromrichter (11, 16) die Drehrichtungen des Elektromotors (13) in Abhängigkeit von einer Unterbrechung der Eingangsspannung steuert.

3. Verfahren nach Anspruch 2, **dadurch gekennzeichnet, dass** der Stromrichter (11, 16) nach der Unterbrechung der Eingangsspannung die Versorgungsspannung während einer Anfangszeitspanne (Δta) mit der ersten Phasenfolge und danach mit der zweiten Phasenfolge erzeugt.

4. Verfahren nach Anspruch 2, **dadurch gekennzeichnet, dass** der Stromrichter (11, 16) bei Beaufschlagung mit der Eingangsspannung eine Zwischenkreisspannung aufweist, die bei Unterbrechung der Eingangsspannung abklingt und nach einer Abklingzeitspanne (t3) eine Mindestspannung (u3) unterschreitet, dass der Stromrichter (11, 16) einen flüchtigen Datenspeicher (23) aufweist, dessen Dateninhalt bei Unterschreitung der Mindestspannung (u3) einen festen ersten Wert annimmt, und dass der Stromrichter (11, 16) die Drehrichtungen des Elektromotors (13) in Abhängigkeit von dem Dateninhalt des Datenspeichers (23) steuert.

5. Verfahren nach Anspruch 4, **dadurch gekennzeichnet, dass** der Stromrichter (11, 16) zwischen zwei Unterbrechungen der Eingangsspannung den Dateninhalt auf einen zweiten Wert setzt und nach einer Unterbrechung der Eingangsspannung, wenn der Dateninhalt den zweiten Wert hat, die Versorgungsspannung während einer Anfangszeitspanne (Δta) mit der ersten Phasenfolge und danach mit der zweiten Phasenfolge erzeugt, und wenn der Dateninhalt den ersten Wert hat, die Versorgungsspannung mit der zweiten Phasenfolge erzeugt.

6. Verfahren nach Anspruch 4, **dadurch gekennzeichnet, dass** der Dateninhalt die Drehrichtung vor der Unterbrechung der Eingangsspannung angibt, dass der Stromrichter (11, 16) nach einer Unterbrechungsdauer der Eingangsspannung, die kürzer ist als die Abklingzeitspanne (t3), die Versorgungsspannung zur Invertierung der Drehrichtung je nach Dateninhalt mit der ersten Phasenfolge oder mit der zweiten Phasenfolge erzeugt, und dass der Stromrichter (11, 16) nach einer Unterbrechungsdauer der Eingangsspannung, die länger ist als die Abklingzeitspanne (t3), die Versorgungsspannung mit der zweiten Phasenfolge erzeugt.

7. Verfahren nach einem der Ansprüche 4 bis 6, **dadurch gekennzeichnet, dass** der Elektromotor (13) abgeschaltet wird, sobald die Zwischenkreisspannung einen Spannungsschwellwert (u2) unterschreitet, der über der Mindestspannung (u3) liegt.

8. Verfahren nach Anspruch 1, **dadurch gekennzeichnet, dass** der Steuerblock (2) einen ersten Ausgang (17b) und einen zweiten Ausgang (17c) aufweist, die alternativ mit der Eingangsspannung beaufschlagt sind, dass der Stromrichter (11, 16) einen mit dem ersten Ausgang (17b) verbundenen ersten Eingang (25b) und einen mit dem zweiten Ausgang (17c) verbundenen zweiten Eingang (25c) aufweist, und dass der Stromrichter (11, 16) die Drehrichtungen in Abhängigkeit von der Beaufschlagung des ersten Eingangs (25b) und/oder des zweiten Eingangs (25c) mit der Eingangsspannung steuert.

9. Verfahren nach einem der vorhergehenden Ansprüche, **dadurch gekennzeichnet, dass** der Stromrichter (11, 16) die Drehzahl des Elektromotors (13) entsprechend einer vorgegebenen Zeitfunktion und/oder innerhalb eines vorgegebenen Drehzahlbandes steuert.

10. Verfahren nach einem der vorhergehenden Ansprüche, **dadurch gekennzeichnet, dass** in dem Stromrichter (11, 16) ein Lastzustand des Elektromotors (13) erfasst wird, und dass der Stromrichter (11, 16) die Drehzahl des Elektromotors (13) entsprechend einer von dem Lastzustand abhängigen Funktion steuert.

11. Verfahren nach einem der vorhergehenden Ansprüche, bei dem das Elektrogerät eine Heizeinrichtung (39) aufweist, **dadurch gekennzeichnet, dass** die Heizeinrichtung (39) nur dann eingeschaltet ist, wenn der Elektromotor (13) mit der zweiten Phasenfolge angetrieben wird.

12. Verfahren nach Anspruch 11, **dadurch gekennzeichnet, dass** die Heizeinrichtung (39) erst zu einem vorgegebenen Zeitpunkt (t4) nach Beaufschlagung des Stromrichters (11, 16) mit der Eingangsspannung eingeschaltet wird.

13. Verfahren nach einem der vorhergehenden Ansprüche, **dadurch gekennzeichnet, dass** nach einer maximalen Drehdauer (Δta) in Nebendrehrichtung der Elektromotor (13) angehalten und/oder in Hauptdrehrichtung betrieben wird.

14. Antriebsaggregat für ein Elektrogerät, insbesondere für einen Wäschetrockner, mit einem mehrphasigen Elektromotor (13), mit einem Stromrichter (11, 16) zum Erzeugen einer mehrphasigen Versorgungsspannung für den Elektromotor (13) aus einer Eingangsspannung, wobei eine erste Phasenfolge eine Drehung des Elektromotors (13) in eine Nebendrehrichtung und eine zweite Phasenfolge eine Drehung des Elektromotors (13) in eine der Nebendrehrichtung entgegengesetzte Hauptdrehrichtung bewirkt, mit einem Steuerblock (2), der eine Beaufschlagung des Stromrichters (11, 16) mit der Eingangsspannung steuert, **dadurch gekennzeichnet, dass** der Stromrichter (11, 16) zur Steuerung der Drehrichtungen des Elektromotors (13) in Abhängigkeit von der Beaufschlagung mit der Eingangsspannung eingerichtet ist.

15. Antriebsaggregat nach Anspruch 14, **dadurch gekennzeichnet, dass** der Stromrichter (11, 16) zur Steuerung der Drehrichtungen des Elektromotors (13) in Abhängigkeit von einer Unterbrechung der Eingangsspannung eingerichtet ist.

16. Antriebsaggregat nach Anspruch 15, **dadurch gekennzeichnet, dass** der Stromrichter (11, 16) eingerichtet ist, nach der Unterbrechung der Eingangsspannung die Versorgungsspannung während einer Anfangszeitspanne (Δta) mit der ersten Phasenfolge und danach mit der zweiten Phasenfolge zu erzeugen.

17. Antriebsaggregat nach Anspruch 15, **dadurch gekennzeichnet, dass** der Stromrichter (11, 16) bei Beaufschlagung mit der Eingangsspannung eine Zwischenkreisspannung aufweist, die bei Unterbrechung der Eingangsspannung abklingt und nach einer Abklingzeitspanne (t3) eine Mindestspannung (u3) unterschreitet, dass der Stromrichter (11, 16) einen flüchtigen Datenspeicher (23) aufweist, der bei Unterschreitung der Mindestspannung (u3) seinen Dateninhalt verliert, und dass der Stromrichter (11, 16) zur Steuerung der Drehrichtungen des Elektromotors (13) in Abhängigkeit von dem Dateninhalt des Datenspeichers (23) eingerichtet ist.

18. Antriebsaggregat nach Anspruch 17, **dadurch gekennzeichnet, dass** der Stromrichter (11, 16) eingerichtet ist, nach einer Unterbrechungsdauer der Eingangsspannung, die kürzer ist als die Abklingzeitspanne (t3), die Versorgungsspannung während einer Anfangszeitspanne (Δta) mit der ersten Phasenfolge und danach mit der zweiten Phasenfolge zu erzeugen, und dass der Stromrichter (11, 16) eingerichtet ist, nach einer Unterbrechungsdauer der Eingangsspannung, die länger ist als die Abklingzeitspanne (t3), die Versorgungsspannung mit der zweiten Phasenfolge zu erzeugen.

19. Antriebsaggregat nach Anspruch 17, **dadurch gekennzeichnet, dass** der Dateninhalt die Drehrichtung vor der Unterbrechung der Eingangsspannung angibt, dass der Stromrichter (11, 16) eingerichtet ist, nach einer Unterbrechungsdauer der Eingangsspannung, die kürzer ist als die Abklingzeitspanne (t3), die Versorgungsspannung zur Invertierung der Drehrichtung je nach Dateninhalt mit der ersten Phasenfolge oder mit der zweiten Phasenfolge zu erzeugen, und dass der Stromrichter (11, 16) eingerichtet ist, nach einer Unterbrechungsdauer der Eingangsspannung, die länger ist als die Abklingzeitspanne (t3), die Versorgungsspannung mit der zweiten Phasenfolge zu erzeugen.

20. Antriebsaggregat nach Anspruch 14, **dadurch gekennzeichnet, dass** der Steuerblock (2) einen ersten Ausgang (17b) und einen zweiten Ausgang (17c) aufweist, die zur alternativen Beaufschlagung mit der Eingangsspannung eingerichtet sind, dass der Stromrichter (11, 16) einen mit dem ersten Ausgang (17b) verbundenen ersten Eingang (25b) und einen mit dem zweiten Ausgang (17c) verbundenen zweiten Eingang (25c) aufweist, und dass der Stromrichter (11, 16) zur Steuerung der Drehrichtungen in Abhängigkeit von der Beaufschlagung des ersten Eingangs (25b) und/oder des zweiten Eingangs (25c) mit der Eingangsspannung eingerichtet ist.

21. Antriebsaggregat nach einem der vorhergehenden Ansprüche, **dadurch gekennzeichnet, dass** der Steuerblock (2) und der Stromrichter (11, 16) als getrennte Baugruppen realisiert sind.

22. Antriebsaggregat nach einem der vorhergehenden Ansprüche, **dadurch gekennzeichnet, dass** der Stromrichter einen Gleichrichter (11) zum Gleichrichten der Eingangsspannung und einen Wechselrichter (16) zum Erzeugen der mehrphasigen Versorgungsspannung umfasst.

23. Wäschetrockner mit einer Wäschetrommel, mit einem Gebläse und mit einem Antriebsaggregat nach einem der Ansprüche 14 bis 22 zum Drehantreiben der Wäschetrommel und/oder des Gebläses mit einem Verfahren nach einem der Ansprüche 1 bis 12.

24. Wäschetrockner nach Anspruch 23, **dadurch gekennzeichnet, dass** eine Riemenscheibe zum Drehantreiben der Wäschetrommel und das Gebläse auf einer Welle angeordnet sind, und dass die Drehzahl des Elektromotors (13) zum gleichzeitigen Antreiben der Wäschetrommel und des Gebläses angepasst ist.
